# EUROPÄISCHE PATENTANMELDUNG

(11) **EP 1 690 885 A1**
(43) Veröffentlichungstag der Anmeldung: **16.08.2006**
(21) Anmeldenummer: 05002627.7
(22) Anmeldetag: 09.02.2005
(51) Int. Cl.: C08G 77/20, D06M 15/643

(54) **Acrylatofunktionelle Polysiloxane**

(71) Anmelder: Ciba Spezialitätenchemie Pfersee GmbH, 86462 Langweid a.L. (DE)
(72) Erfinder: Chrobaczek, Harald, Dr., 86153 Augsburg (DE); Ellmann, Jürgen, Dr., 86163 Augsburg (DE); Niederstadt, Rule, 86157 Augsburg (DE); Tschida, Günther, 86830 Schwabmünchen (DE)

(57) **Zusammenfassung**

Zusammensetzungen, welche acrylatofunktionelle Polysiloxane enthalten, fassen sich herstellen durch Umsetzung von Dihydroxypolyorganosiloxanen mit einem Gemisch zweier verschiedener acrylatofunktioneller Silane.

Die Zusammensetzungen können für die Behandlung textiler Flächengebilde, insbesondere für die Vorhangbeschichtung verwendet werden.

## Beschreibung

Die vorliegende Erfindung betrifft acrylatofunktionelle Polysiloxane enthaltende Zusammensetzungen, welche nach einem speziellen Verfahren hergestellt werden können. Sie betrifft ferner die Verwendung solcher Zusammensetzungen.

Polysiloxane, welche Acrylatogruppen enthalten, sind bekannt, z.B. aus der DE-A 102 19 734, EP-A 564 253, US-A 4 528 081 und der EP-A 373 659.
Aus der oben genannten Literatur geht außerdem hervor, dass es bekannt ist, Siliciumverbindungen, welche Acrylateinheiten enthalten, durch radikalische Polymerisation zu härten. Diese radikalische Polymerisation kann z.B. durch UV-Bestrahlung erfolgen.
Die aus dem oben genannten Stand der Technik bekannten acrylatofunktionellen Polyorganosiloxane enthalten entweder nur Produkte mit Einheiten

≡ Si-CH₂-CH(R²)-CH₂-OC(O)CH=CH₂

bzw. den entsprechenden Methacrylateinheiten. Hierbei steht R² für Wasserstoff oder für CH₃. Diese Einheiten

― CH₂―CH (R²)―CH₂―OC(O)CH=CH₂

bzw.

― CH₂―CH (R²) ―CH₂―OC(O)―C(CH₃)=CH₂

werden im Folgenden als "γ-Einheiten" bezeichnet.
Oder aber die bekannten Polysiloxane enthalten nur Produkte mit Einheiten

≡ Si-CH₂-OC(O)-CH=CH₂

bzw. den entsprechenden Methacrylateinheiten.
Die Einheiten

-CH₂-OC(O)-CH=CH₂

bzw. die entsprechenden Methacrylateinheiten werden im Folgenden als "α-Einheiten" bezeichnet.
Acrylatofunktionelle Polysiloxane, welche nur α-, aber keine γ-Einheiten an Silicium gebunden enthalten, besitzen den Nachteil, dass sie normalerweise hohe Viskositäten aufweisen, nach Polymerisation harte Filme bilden und daher für viele Einsatzzwecke ungeeignet sind. Acrylatofunktionelle Polysiloxane, welche nur γ-, aber keine α-Einheiten an Silicium gebunden enthalten, besitzen den Nachteil, dass nach Aushärtung/Polymerisation Filme erhalten werden, welche mehr oder weniger klebrig und damit für eine Reihe von Verwendungszwecken ungeeignet sind.
Versuche, acrylatofunktionelle Polysiloxane mit ausschließlich α-Einheiten mit acrylatofunktionellen Polysiloxanen mit ausschließlich γ-Einheiten zu mischen, haben den Nachteil, dass sie aufwendig und teuer sind. Es müssen hierzu nämlich in zwei getrennten Prozessen die beiden unterschiedlichen Polysiloxane hergestellt werden.

Die Aufgabe, welche der vorliegenden Erfindung zugrundelag, bestand darin, Zusammensetzungen zur Verfügung zu stellen, welche acrylatofunktionelle Polyorganosiloxane enthalten und die geschilderten Nachteile von bekannten acrylatofunktionellen Polyorganosiloxanen nicht aufweisen.

Die Aufgabe wurde gelöst durch eine Zusammensetzung, welche hergestellt werden kann durch Umsetzung eines Hydroxygruppen enthaltenden Polyorganosiloxans, dessen Kettenenden durch Gruppen der Formel (I)

(R⁸)(R)₂Si-O- (I)

gebildet werden und das innerhalb der Siloxankette Einheiten der Formel (II) aufweist

-Si(R¹)(R⁹)-O- (II)

oder eines Gemischs solcher Polyorganosiloxane
mit einem Gemisch aus Silanen der Formel (III) und der Formel (IV) 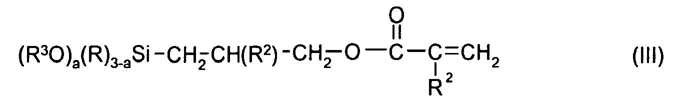 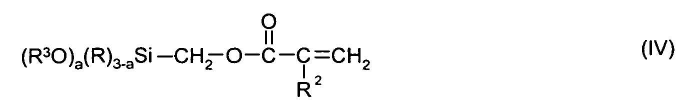 wobei a den Wert 1, 2 oder 3 besitzt, vorzugsweise den Wert 2,
worin
alle anwesenden Reste R unabhängig voneinander für einen Alkylrest mit 1 bis 4 Kohlenstoffatomen oder für den unsubstituierten Phenylrest stehen,
alle anwesenden Reste R¹ unabhängig voneinander für R oder für einen Rest der Formel (V) stehen, 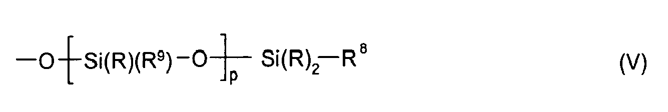 alle anwesenden Reste R³ unabhängig voneinander für einen Alkylrest mit 1 bis 4 Kohlenstoffatomen stehen,
alle anwesenden Reste R⁸ unabhängig voneinander für R oder eine Hydroxygruppe stehen,
p für eine Zahl von 3 bis 25 steht,
alle anwesenden Reste R⁹ unabhängig voneinander für R oder eine OH-Gruppe stehen,
wobei mindestens zwei der anwesenden Reste R⁸ für OH stehen
und wobei alle anwesenden Reste R² unabhängig voneinander für H oder CH₃ stehen,
wobei gegebenenfalls nach der Umsetzung noch anwesende OH-Gruppen mit einem einwertigen linearen oder verzweigten Alkohol mit 1 bis 16 Kohlenstoffatomen weiter umgesetzt werden.

Die genannten Hydroxygruppen enthaltenden Polyorganosiloxane, die im Folgenden mit "α, ω-Dihydroxypolyorganosiloxane" bezeichnet werden, werden also mit einem Gemisch von Silanen umgesetzt, von denen das eine (Formel IV) α-Einheiten und das andere (Formel III) γ-Einheiten enthält. Diese Umsetzung wird, wie unten näher erläutert, so durchgeführt, dass entweder eine Äquilibrierung stattfindet, bei der Struktureinheiten der beiden Silane in die Kette des α, ω-Dihydroxypolyorganosiloxans eingebaut werden. Oder aber, und dies ist bevorzugt, die Umsetzung wird so durchgeführt, dass Kondensationsreaktionen zwischen endständigen OH-Gruppen des Polysiloxans und den beiden Silanen stattfinden. Die zweite Variante, nämlich Kondensation ist unter anderem deshalb bevorzugt, weil sie unter schonenderen Bedingungen, d.h. bei niedrigerer Temperatur durchgeführt werden kann als die Äquilibrierungsreaktion. Durch die genannten Umsetzungen entstehen Polyorganosiloxane, welche im gleichen Molekül sowohl α- als auch γ-Einheiten enthalten. Sie sind Polysiloxanen überlegen, welche nur α oder nur γ-Einheiten enthalten, und sie sind kostengünstiger herzustellen als Gemische dieser beiden, aus dem Stand der Technik bekannten, Polysiloxane.

Bei der Umsetzung der Dihydroxypolyorganosiloxane mit dem Gemisch von Silanen der Formel (III) und der Formel (IV) entstehen Gemische von Produkten. Die Art und der relative Anteil der einzelnen Komponenten des entstandenen Gemischs, d.h. der erfindungsgemäßen Zusammensetzung, hängen von Art und Menge der Ausgangsverbindungen und von den Reaktionsbedingungen ab.

Es sind prinzipiell 2 Arten von Umsetzungsmechanismen denkbar, nämlich eine Reaktionsführung, welche zu Äquilibrierungsreaktionen führt, oder eine Reaktionsführung, welche zu Kondensationsreaktionen führt. Bevorzugt ist es, die Umsetzung so durchzuführen, dass nur Kondensation stattfindet, aber keine Äquilibrierung. Die Kondensation läuft bei niedrigeren Temperaturen ab und ist daher kostengünstiger. Bei der Kondensation reagieren OR³-Gruppen der Silane der Formel (III) und der Formel (IV) mit endständigen OH-Gruppen des α, ω-Dihydroxypolysiloxans unter Abspaltung von Alkohol R³OH und Kettenverlängerung. Es entstehen Polyorganosiloxane, welche sowohl α-Einheiten als auch γ-Einheiten im gleichen Molekül enthalten.
Die Umsetzung lässt sich als Kondensation bei einer Temperatur im Bereich von 80 bis 105°C während 3 bis 4 Stunden durchführen, vorzugsweise unter vermindertem Druck, z.B. bei einem Druck im Bereich von 100 mbar. Einzelheiten über Kondenstionsreaktionen sind aus der Silikonchemie bekannt. Damit Kondensation überhaupt stattfinden kann, muß das verwendete Polysiloxan an mindestens zwei Kettenenden Hydroxygruppen aufweisen.

Äquilibrierungsreaktionen sind ebenfalls aus der Literatur über Silikonchemie gut bekannt. Bei der Äquilibrierung werden in die Polysiloxankette Silaneinheiten insertiert. Die Äquilibrierung erfordert also, dass Si-O-Si-Bindungen in der Kette gespalten werden. Hieraus erklärt sich, dass für Äquilibrierung höhere Temperaturen erforderlich sind als für Kondensation. Die Umsetzung bei welcher erfindungsgemäße Zusammensetzungen entstehen, führt man für den Fall, dass Äquilibrierung gewünscht wird, bei einer Temperatur im Bereich von 110 bis 135°C während einer Zeit von 3 bis 4 Stunden durch. Die Äquilibrierungsreaktion wird vorzugsweise in Anwesenheit von Wasser durchgeführt, um OR³-Gruppen zu OH-Gruppen zu hydrolysieren.
Auch bei der Äquilibrierung entstehen Polysiloxane, welche im gleichen Molekül sowohl α- als auch auch γ-Einheiten enthalten.

Die Umsetzung, welche zu erfindungsgemäßen Zusammensetzungen führt, wird vorzugsweise unter Mitverwendung eines Katalysators oder eines Gemischs von Katalysatoren durchgeführt, und zwar sowohl bei der Umsetzung in Form einer Kondensation als auch in Form einer Äquilibrierung.
Geeignete Katalysatoren sind aus der Silikonliteratur bekannt. In manchen Fällen können saure Katalysatoren angewendet werden, z.B. Lewis-Säuren oder verdünnte Mineralsäuren; im Normalfall sind jedoch basische Katalysatoren besser geeignet und daher bevorzugt. Gut geeignete basische Katalysatoren sind Alkalimetallhydroxide wie NaOH, KOH oder LiOH und insbesondere Metallalkoholate. Unter den Matallalkoholaten sind Alkalimetallalkoholate der Formel M(OR³) besonders gut geeignet. Diese Metallalkoholate können z.B. als 20 bis 30 %ige Lösung in dem zugrundeliegenden Alkohol R³-OH eingesetzt werden. Hierbei steht M für Na oder K und R³ für einen Alkylrest mit 1 bis 4 Kohlenstoffatomen.
Weitere geeignete Katalysatoren sind 4-Dimethylamino-pyridin und bicyclische Verbindungen, welche ein oder mehrere Stickstoffatome als Ringglieder enthalten. Beispiele sind 1.5-Diazabicyclo [2.2.2.]-octan, 1.5-Diazabicyclo [4.3.0]-non-5-en und 1.8-Diazabicyclo [5.4.0] undec-7-en.

Besonders gute Ergebnisse werden erhalten, wenn die zu erfindungsgemäßen Zusammensetzungen führende Umsetzung so durchgeführt wird, dass pro Mol OH-Gruppen des α, ω-Dihydroxypolyorganosiloxans 0,01 bis 0,6 Mol an Silanen der Formel (III) und der Formel (IV) eingesetzt werden.
Dabei bezieht sich der genannte Bereich von 0,01 bis 0,6 auf die Summe aller verwendeten Silane der Formel (III) und der Formel (IV). Werden zusätzlich weitere Silane eingesetzt, also solche, welche nicht unter Formel (III) oder Formel (IV) fallen, so betrifft trotzdem der oben genannte Bereich von 0,1 bis 0,6 nur das Mengenverhältnis von α, ω-Dihydroxypolyorganosiloxan zur Summe der Silane der Formel (III) und (IV), d.h. zusätzlich verwendete Silane werden in dieses Verhältnis nicht mit eingerechnet.

Für die anwendungstechnischen Eigenschaften der erfindungsgemäßen Zusammensetzungen ist es in vielen Fällen von Vorteil, wenn die Silane der Formel (III) in höheren molaren Mengen als die Silane der Formel (IV) eingesetzt werden. Eine bevorzugte Ausführungsform erfindungsgemäßer Zusammensetzungen besteht darin, dass bei der Umsetzung ein Gemisch von Silanen der Formel (III) und der Formel (IV) eingesetzt wird, das 2 bis 20, vorzugsweise 5 bis 14, Mole an Silan der Formel (III) pro Mol an Silan der Formel (IV) enthält.

Die verwendeten α, ω-Dihydroxypolyorganosiloxane müssen mindestens an zwei Kettenenden Gruppen der Formel (I)

HO(R)₂Si-O- (I)

aufweisen. Hierbei besitzt R die oben genannte Bedeutung. Die Hydroxygruppen sind, wie oben beschrieben, erforderlich, damit Kondensationsreaktionen zwischen diesen Polysiloxanen und dem Gemisch von Silanen ablaufen können. Die Reste R in Formel (I) stehen unabhängig voneinander für einen Alkylrest mit 1 bis 4 Kohlenstoffatomen oder für den unsubstituierten Phenylrest. Gut als Reste R geeignet sind Methylgruppen.
Die verwendeten α, ω-Dihydroxypolyorganosiloxane weisen innerhalb der Polysiloxankette Einheiten der Formel (II) auf

-Si(R¹)(R⁹)-O- (II)

Alle Reste R⁹ stehen unabhängig voneinander für R oder OH. Alle Reste R¹ stehen unabhängig voneinander für R oder für einen Rest der Formel (V)

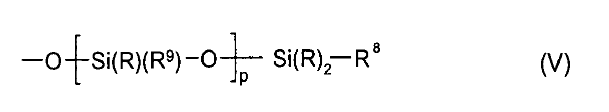

Alle anwesenden Reste R⁸ stehen unabhängig voneinander für R oder OH,
p steht für eine Zahl von 3 bis 25.

Die für die Umsetzung mit Silanen eingesetzten α, ω-Dihydroxypolyorganosiloxane können α, ω-Dihydroxypolydimethylsiloxane sein, in denen außer zwei oder mehr endständigen Hydroxygruppen nur Methylgruppen an Siliciumatome gebunden sind. Sie können aber auch Polysiloxane sein, welche weitere funktionelle Gruppen enthalten, insbesondere weitere Gruppen, die in Seitenketten der Polysiloxane vorliegen. So sind beispielsweise Polysiloxane gut verwendbar, welche zusätzlich Aminogruppen enthalten. Bevorzugt hierbei sind α, ω-Dihydroxypolyorgano-siloxane, welche außer Einheiten der Formeln (I) und (II) innerhalb der Siloxankette zusätzlich eine oder mehrere Einheiten der Formel (VI)

-Si(R⁹)(Z)-O- (VI)

enthalten, worin alle anwesenden Reste Z unabhängig voneinander für einen Rest der Formel (VII) oder der Formel (VIII) stehen 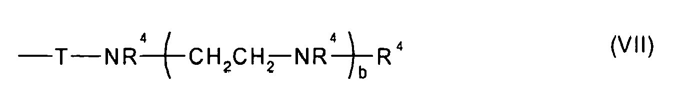 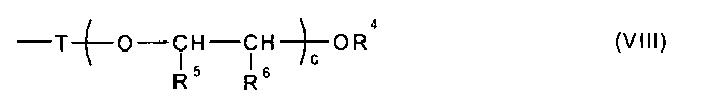 worin T für einen linearen oder verzweigten Alkylenrest mit 1 bis 4 Kohlenstoffatomen steht,
worin
b den Wert 0, 1 oder 2 besitzt,
c eine Zahl von 1 bis 20 ist,
alle Reste R⁴ unabhängig voneinander für H oder R stehen,
in jeder Einheit der Formel (VIII) einer der Reste R⁵ und R⁶ für H und der andere für H oder CH₃ steht.

Ferner sind Polysiloxane geeignet, in denen modifizierte, d.h. chemisch veränderte Seitenketten der Formel (VII) vorliegen. Hierbei besteht die chemische Modifikation darin, dass an einem oder mehreren der Stickstoffatome eine der folgenden Umsetzungen durchgeführt wurden:
a) Quaternisierung mit Alkylierungsmitteln, sodaß das betreffende Stickstoffatom an 4 Kohlenstoffatome gebunden ist und somit in positiv geladener Form vorliegt.
b) Umsetzung mit γ-Butyrolacton unter Ringöffnung, sodaß ein Amid der ω-Hydroxybuttersäure entsteht
c) Acylierung mittels Carbonsäureanhydrid, insbesondere mittels Acetanhydrid

Zur Herstellung erfindungsgemäßer Zusammensetzungen geeignete α, ω-Dihydroxypolyorganosiloxane, auch solche mit Aminogruppen enthaltenden Seitenketten, sind handelsübliche, auf dem Markt erhältliche Polymere. Sie können unter anderem von den Firmen Wacker Chemie, DE, und Dow Corning bezogen werden.

Bei den Silanen der Formel (III) und der Formel (IV) 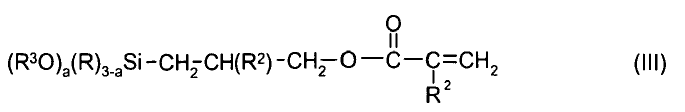 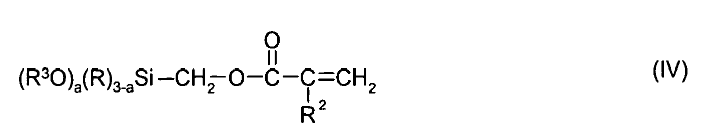 sind solche bevorzugt, in welchen a den Wert 2 hat, a kann jedoch auch den Wert 1 oder 3 annehmen. Alle Reste R stehen unabhängig voneinander für einen Alkylrest mit 1 bis 4 Kohlenstoffatomen oder für den unsubstituierten Phenylrest. Alle Reste R³ stehen unabhängig voneinander für einen Alkylrest mit 1 bis 4 Kohlenstoffatomen, insbesondere für den Methyl- oder Ethylrest. Alle anwesenden Reste R² stehen unabhängig voneinander für Wasserstoff oder den Methylrest, das heißt, es können sowohl Silane mit Acrylateinheiten als auch solche mit Methacrylateinheiten oder Gemische aus Acrylatosilanen und Methacrylatosilanen eingesetzt werden.

Silane der Formel (III) und der Formel (IV) sind auf dem Markt erhältlich, z.B. von der Firma Wacker Chemie GmbH, DE (GENIOSIL XL 32) oder der Firma ABCR GmbH & Co., Karlsruhe, DE.
Silane der Formel (IV) können nach der Lehre der oben genannten DE-A 102 19 734 hergestellt werden. Eine Möglichkeit der Herstellung besteht darin, Acrylsäure oder Methacrylsäure mit

(R³O)ₐ(R)₃₋ₐSi CH₂ Cl

unter basischer Katalyse umzusetzen.
Silane der Formel (III) lassen sich erhalten durch Addition von

(R³O)ₐ(R)₃₋ₐSi H

an Allylalkohol oder Methallylalkohol und anschließende Veresterung oder Umesterung mit (Meth)Acrylsäure oder deren Ester.

Außer den Silanen der Formel (III) und der Formel (IV), die immer an der Umsetzung mit α, ω-Dihydroxypolyorganosiloxan beteiligt sind, können zusätzlich weitere Silane eingesetzt werden. Ein Beispiel hierfür sind Silane der Formel (X) 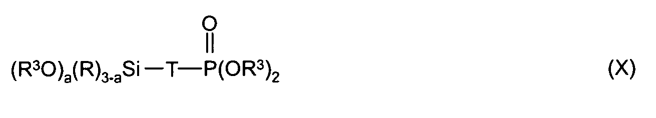 insbesondere der Formel 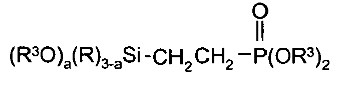 worin R³, R und a die oben genannten Bedeutungen besitzen. T steht hierbei für einen linearen oder verzweigten zweiwertigen Alkylenrest mit 1 bis 4 Kohlenstoffatomen. Solche Silane lassen sich herstellen durch katalytische Addition von Dialkylphosphit an Vinylsilane der Formel

(R³O)ₐ(R)₃₋ₐSi CH=CH₂

Dies ist beschrieben in der DE-A 22 19 983.

Besonders gut geeignet für zusätzliche Verwendung neben Silanen der Formel (III) und der Formel (IV) sind Silane, welche eine oder mehrere Aminogruppen enthalten. Eine bevorzugte Ausführungsform erfindungsgemäßer Zusammensetzungen ist somit dadurch gekennzeichnet, dass zusätzlich zu den Silanen der Formel (III) und der Formel (IV) für die Umsetzung mit α, ω-Dihydroxypolyorganosiloxan ein oder mehrere Silane verwendet werden, die aus Silanen der Formel (IX), der Formel (X) und der Formel (XI) ausgewählt sind 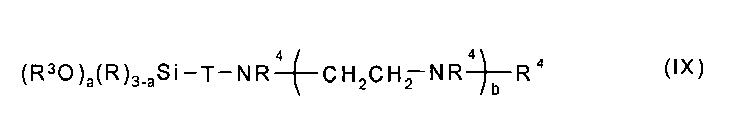 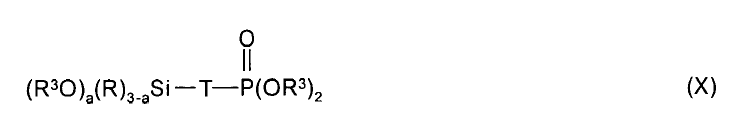 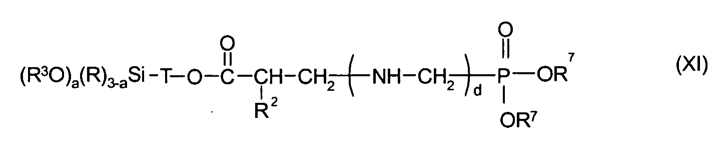 worin die anwesenden Reste R⁷ unabhängig voneinander für -CH₃ oder für -CH₂-CH₃ stehen und d den Wert 0 oder 1 besitzt,
wobei R, R², R³, R⁴, T, a und b die in Anspruch 1 bzw. 2 genannten Bedeutungen besitzen.
Die stickstoffhaltigen Silane der Formeln (IX) und (XI) können hierbei auch in modifizierter Form vorliegen, bei der eines oder mehrere der Stickstoffatome chemisch umgesetzt wurden, wie oben im Zusammenhang mit Formel (VII) beschrieben, nämlich Umsetzung mit Butyrolacton, Acylierung oder Quaternisierung. Eine solche Modifizierung /Umsetzung kann aber auch durchgeführt werden, nachdem das Silangemisch mit dem α, ω-Dihydroxypolysiloxan umgesetzt worden ist.

Nach der Umsetzung der Dihydroxypolysiloxane mit dem Gemisch der Silane können Hydroxygruppen, welche gegebenenfalls in der erhaltenen Zusammensetzung noch vorliegen, durch Umsetzung mit einem einwertigen Alkohol blockiert, also verethert werden. Die hierzu verwendeten einwertigen Alkohole sind aliphatische, verzweigte oder unverzweigte Alkohole mit 1 bis 16 Kohlenstoffatomen. Von dieser Blockierung/Entfernung freier OH-Gruppen kann dann Gebrauch gemacht werden, wenn es erforderlich ist, die Viskosität erfindungsgemäßer Zusammensetzungen, die noch freie Hydroxygruppen enthalten, gezielt einzustellen.

Erfindungsgemäße Zusammensetzungen können, wenn gewünscht, in Wasser dispergiert werden. Hierfür geeignete Dispergatoren sind dem Fachmann aus der Literatur über Silikone bekannt. Dazu gehören nichtionogene Tenside wie Fettalkoholethoxilate oder kationische Tenside wie quaternäre Ammoniumsalze. Wässrige Dispersionen erfindungsgemäßer Zusammensetzungen lassen sich unter anderem zur Ausrüstung von Papier verwenden.
Eine bevorzugte Verwendung erfindungsgemäßer Zusammensetzungen ist die Behandlung von Fasermaterialien mit diesen Zusammensetzungen. Dies kann im Rahmen bekannter Textilausrüstungs- bzw. Textilveredlungsprozesse geschehen, z.B. indem man wässrige Dispersionen erfindungsgemäßer Zusammensetzungen über ein Foulardverfahren auf textile Flächengebilde aus Fasermaterialien aufbringt. Die hierzu verwendeten wässrigen Dispersionen können außerdem weitere Produkte enthalten, wie sie für Textilbehandlung üblich sind, z.B. öl- und wasserabweisende Produkte, Wachse als Weichgriffmittel, flammhemmende Produkte. Die Fasermaterialien sind bevorzugt textile Flächengebilde in Form von Geweben, Maschenware oder Vliesen (non-wovens). Sie können unter anderem aus natürlichen Polymeren wie Cellulose oder aus synthetischen Polymeren wie Polyestern, Polyacrylnitril oder Polyamiden bestehen.

Erfindungsgemäße Zusammensetzungen lassen sich besonders vorteilhaft für die Vorhangbeschichtung von Fasermaterialien in Form von Geweben verwenden. Diese Vorhangsbeschichtung (curtain coating) kann nach allgemein bekannten Verfahren durchgeführt werden. Hierbei wird eine dünne Schicht aus einer flüssigen erfindungsgemäßen Zusammensetzung, die vertikal geführt wird, auf ein horizontal bewegtes textiles Flächengebilde aufgebracht. Anschließend wird getrocknet und bei erhöhter Temperatur kondensiert/gehärtet, wobei Kohlenstoff-Kohlenstoff-Doppelbindungen polymerisiert werden. Die Vorhangbeschichtung setzt voraus, dass die Viskositäten der flüssigen Beschichtungsflüssigkeiten in einem bestimmten Bereich liegen. Gegebenenfalls muß man, um flüssige erfindungsgemäße Zusammensetzungen in einem bestimmten Viskositätsbereich zu erhalten, niedrigviskose Produkte zufügen, z.B. organische Lösungsmittel oder niedrigviskose flüssige Acrylatmonomere oder -oligomere.
Für die Vorhangbeschichtung werden erfindungsgemäße Zusammensetzungen normalerweise nicht in Form wässriger Dispersionen verwendet, sondern ohne Zusätze oder mit den oben genannten Zusätzen zur Steuerung der Viskosität.
Auch für die Vorhangbeschichtung (curtain coating) können die oben genannten Fasermaterialien aus natürlichen oder synthetischen Polymeren in Betracht. Besonders gut geeignet hierfür sind Gewebe aus Polyamid. Mit diesen Geweben können beschichtete Gewebe für den Einsatz als Airbags für Kraftfahrzeuge hergestellt werden.

Die Gewebe können vor Durchführung der Vorhangbeschichtung einer bekannten Vorbehandlung mittels Plasma ausgesetzt werden.

Wie oben erwähnt, muß nach der Applikation der erfindungsgemäßen Zusammensetzung das behandelte textile Flächengebilde eine Kondensationsstufe durchlaufen. Hierdurch werden die in den Zusammensetzung anwesenden Kohlenstoff-Kohlenstoff-Doppelbindungen mindestens zu einem wesentlichen Anteil polymerisiert. Die Kondensation/Polymerisation kann durch UV-Bestrahlung bewirkt werden. Macht man hiervon Gebrauch, so werden der erfindungsgemäßen Zusammensetzung ein oder mehrere Photoinitiatoren zugesetzt. Die als Photoinitiatoren verwendbaren Produkte sind bekannt. Hierzu gehören Produkte der Serie IRGACURE®, z.B. IRGACURE® 184 und 819 (Ciba Spezialitätenchemie AG, Basel, CH). Weitere geeignete Produkte beschreibt die US-B1 6 211 308 (Spalte 10).
Die Kondensation/Härtung, welche nach der Applikation erfindungsgemäßer Zusammensetzungen auf textile Flächengebilde durchgeführt wird, kann statt durch UV-Bestrahlung auch mittels Elektronenstrahlen erfolgen. Hierzu ist kein Photoinitiator erforderlich.
Die Kondensation/Härtung kann sich in einem kontinuierlich durchgeführten Prozeß an die Applikation mittels Vorhangbeschichtung anschließen. Geeignete Parameter zur Durchführung von Vorhangbeschichtung und zur kontinuierlichen anschließenden Härtung sind der EP-A 1 498 533 zu entnehmen.

Die Erfindung wird nunmehr durch Ausführungsbeispiele veranschaulicht.

### Beispiel 1 (erfindungsgemäß)

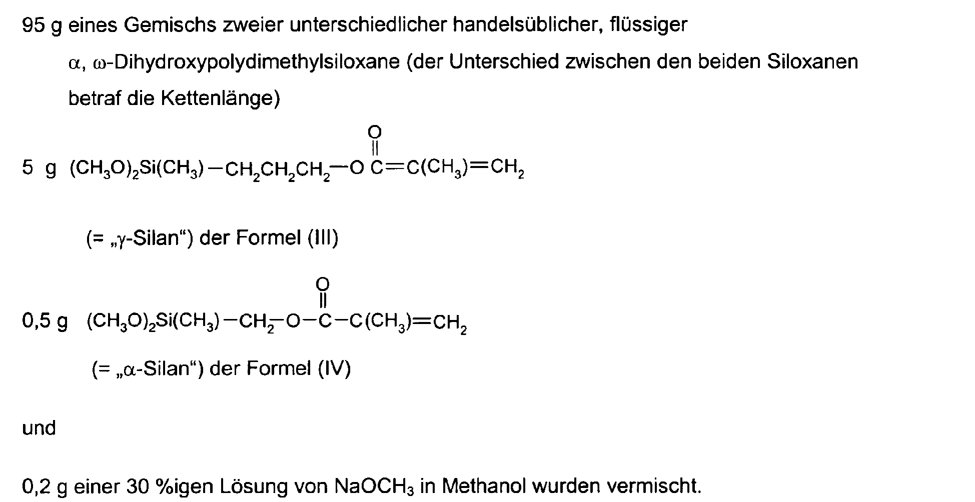

Das Molverhältnis γ-Silan : α-Silan betrug etwa 9:1. Unter N₂-Atmosphäre und unter Rühren wurde die Mischung auf 90°C erwärmt und 5 Minuten bei dieser Temperatur gehalten. Anschließend wurde der Druck langsam (Schaumbildung!) auf 100 mbar erniedrigt und bei 90°C Methanol abdestilliert. Nach etwa 1,5 Stunden ging nur noch wenig Methanol über. Eine Probe der bis dahin gebildeten Flüssigkeit besaß bei Raumtemperatur eine Viskosität von etwa 300 mPa.s.
Der gebildeten Flüssigkeit wurden nun noch einmal 0,08 g der NaOCH₃-Lösung zugesetzt, und es wurde weiter während 30 Minuten bei vermindertem Druck und bei 90°C Methanol abdestilliert. Eine Probe der Lösung besaß jetzt eine Viskosität von etwa 700 mPa.s bei Raumtemperatur. Man gab noch mal 0,05 g der Katalysatorlösung (NaOCH₃-Lösung) zu und destillierte nochmal 30 Minuten bei 90°C und unter vermindertem Druck. Es wurde eine Lösung mit einer Viskosität von etwa 1200 mPa.s bei 20°C erhalten (= "Lösung 1"). Diese Lösung eignete sich gut für die Vorhangbeschichtung von Geweben.

### Beispiel 2 (erfindungsgemäß)

Beispiel 1 wurde mit folgenden Abweichungen wiederholt:
Das Molverhältnis γ-Silan : α-Silan betrug etwa 1,5:1
Es wurden 3,2 g γ-Silan (das gleiche Silan wie in Beispiel 1)
und
1,9 g α-Silan (das gleiche Silan wie in Beispiel 1)
eingesetzt.
Die am Ende der Synthese erhaltene Lösung (="Lösung 2") besaß eine Viskosität von etwa 6000 mPa.s bei 20°C. Sie ist für Vorhangbeschichtung nicht ganz so gut geeignet wie Lösung 1.

### Beispiel 3 (erfindungsgemäß)

Bei diesem Beispiel wurde ein α, ω-Dihydroxypolysiloxan nicht nur mit einem Gemisch aus einem Silan mit α-Einheiten (Formel IV) und einem Silan mit γ-Einheiten (Formel (III)) umgesetzt. Vielmehr wurde ein Gemisch aus 4 Silanen eingesetzt, nämlich einem Silan mit α-Einheiten, einem Silan mit γ-Einheiten, einem aminofunktionellen Silan und einem Silan, das eine Phosphonogruppe enthielt. Das bei der Umsetzung entstehende Polyorganosiloxan lässt sich wegen der Anwesenheit von Stickstoff- und Phosphoratomen für die flammhemmende Ausrüstung von Textilien einsetzen.
88 g des Gemisches aus zwei Dihydroxypolyorganosiloxanen, wie in Beispiel 1 genannt, wurden vermischt mit
4,8 des in Beispiel 1 genannten γ-Silans
0,48 g des α-Silans von Beispiel 1
2,2 g (CH₃O)₂Si(CH₃) CH₂CH₂CH₂―NH―CH₂CH₂-NH₂
3,5 g (C₂H₅O)₂P(O)―CH₂CH₂―Si(OC₂H₅)₃
und
0,2 g 30 %iger Lösung von NaOCH₃ in Methanol

Die Verarbeitung des Gemischs erfolgte, wie in Beispiel 1 angegeben.
Man erhielt eine flüssige Zusammensetzung (= "Lösung 3") mit einer Viskosität von etwa 1000 mPa.s bei 20°C.
Diese Zusammensetzung war gut für die Vorhangbeschichtung von Geweben geeignet.

### Beispiel 4 (nicht-erfindungsgemäßes Vergleichsbeispiel)

Bei diesem Beispiel wurde das Gemisch zweier α, ω-Dihydroxypolysiloxane (siehe Beispiel 1) nur mit einem Silan mit α-Einheiten (Formel IV) umgesetzt. Ein Silan mit γ-Einheiten (Formel (III)) war an der Umsetzung nicht beteiligt.
95 g des in Beispiel 1 genannten Gemischs aus zwei Dihydroxypolysiloxanen,
4,7 g des in Beispiel 1 genannten Silans mit α-Einheiten
und
0,2 g der oben genannten NaOCH₃-Lösung wurden gemischt und weiterverarbeitet, wie in Beispiel 1 angegeben.
Es resultierte eine Lösung (= "Lösung 4") mit einer Viskosität von etwa 12000 mPa.s bei 20°C. Diese Lösung besitzt eine für Vorhangbeschichtung unakzeptabel hohe Viskosität.

### Beispiel 5 (nicht-erfindungsgemäßes Vergleichsbeispiel)

Bei diesem Beispiel wurde das Gemisch zweier α, ω-Dihydroxypolysiloxane nur mit einem Silan mit γ-Einheiten (Formel III) umgesetzt. Ein Silan mit α-Einheiten (Formel IV) wurde nicht mitverwendet.
84 g des in Beispiel 1 genannten Gemischs zweier α, ω-Dihydroxypolysiloxane,
5,4 g des in Beispiel 1 genannten γ-Silans
und
0,2 g der genannten NaOCH₃-Lösung in Methanol
wurden gemischt und weiterverarbeitet, wie in Beispiel 1 beschrieben. Es resultierte eine Lösung (= "Lösung 5") mit einer Viskosität von etwa 850 mPa.s bei 20°C.

### Beispiel 6

Dieses Beispiel betrifft eine Mischung aus einem ersten Polysiloxan, in dem α-Einheiten an Si-Atome gebunden sind, jedoch keine γ-Einheiten, und einem zweiten Polysiloxan, in dem γ-Einheiten an Si-Atome gebunden sind, jedoch keine α-Einheiten. Dieses Gemisch wurde hergestellt durch Vermischen von 90 Gewichtsteilen der Lösung 5 (siehe Beispiel 5) und 10 Gewichtsteilen der Lösung 4 (siehe Beispiel 4). Es wurde eine Lösung (= "Lösung 6") mit einer Viskosität von etwa 2400 mPa.s bei 20°C erhalten.
Die erhaltene Lösung enthielt also sowohl α-Einheiten als auch γ-Einheiten, jedoch nicht im gleichen Molekül. Ihre Herstellung ist mit höherem Aufwand und mit höheren Kosten verbunden als die Herstellung erfindungsgemäßer Zusammensetzungen, weil zwei unterschiedliche Polysiloxane getrennt voneinander hergestellt werden müssen. Bei der Herstellung erfindungsgemäßer Zusammensetzungen dagegen muß nur eine Polysiloxansynthese durchgeführt werden.

### Beispiel 7

Zu jeder der Lösungen 1 bis 6 wurden je 2 Gew% eines Photoinitiators (DAROCURE® 1173 der Ciba Spezialitätenchemie, Basel, CH) hinzugefügt, eines Initiators auf Basis eines aromatischen Hydroxyketons. Mit den erhaltenen Zusammensetzungen (= "Zusammensetzungen 1 bis 6") wurden Gewebe mit einer Auflage von 15 bis 20 g/m² beschichtet und durch UV-Bestrahlung (Wellenlängenbereich 200 - 400 nm, Leistung etwa 120 W/cm) gehärtet. Es zeigte sich, dass nur die Zusammensetzungen 1, 2 und 3 gemäß Beispielen 1, 2 und 3 geeignete Filme auf dem Gewebe ergaben. Der Film gemäß Beispiel 4 war sehr hart, eine Folge der hohen Viskosität der Lösung 4. Der Film gemäß Beispiel 5 war zu weich, klebrig und schmierig. Der Film gemäß Beispiel 6 war zwar besser als die Filme aus den Zusammensetzungen 4 und 5, jedoch spröde und daher weniger gut als Beschichtung geeignet als die Filme, welche aus den Beispielen 1 bis 3 resultierten.

Die nach Polymerisation der Zusammensetzung 6 erhaltenen Filme waren eindeutig schlechter als die nach Polymerisation von Zusammensetzung 1 erhaltenen, obwohl in beiden Fällen das molare Verhältnis von γ- zu α-Einheiten etwa 9:1 betrug. Der Unterschied in den Eigenschaften von Zusammensetzung 1 gegenüber Zusammensetzung 6 ist also aus der Tatsache zu erklären, dass in Zusammensetzung 1 die α- und die γ-Einheiten im gleichen Molekül anwesend waren, während in Zusammensetzung 6 eine intermolekulare Mischung eines Silikons mit α-Einheiten und eines Silikons mit γ-Einheiten vorlag.

## Patentansprüche

1. Zusammensetzung, herstellbar durch Umsetzung eines Hydroxygruppen enthaltenden Polyorganosiloxans, dessen Kettenenden durch Gruppen der Formel (I)
(R⁸)(R)₂Si-O- (I)
gebildet werden und das innerhalb der Siloxankette Einheiten der Formel (II) aufweist
-Si(R¹)(R⁹)-O- (II)
oder eines Gemischs solcher Polyorganosiloxane
mit einem Gemisch aus Silanen der Formel (III) und der Formel (IV) 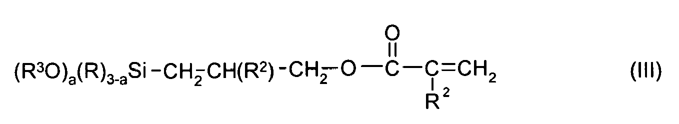 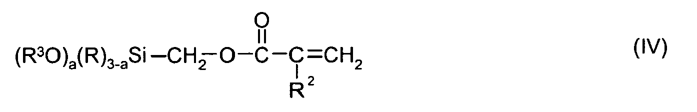 wobei a den Wert 1, 2 oder 3 besitzt, vorzugsweise den Wert 2,
worin
alle anwesenden Reste R unabhängig voneinander für einen Alkylrest mit 1 bis 4 Kohlenstoffatomen oder für den unsubstituierten Phenylrest stehen,
alle anwesenden Reste R¹ unabhängig voneinander für R oder für einen Rest der Formel (V) stehen, 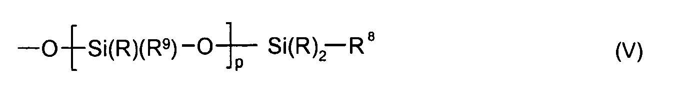 alle anwesenden Reste R³ unabhängig voneinander für einen Alkylrest mit 1 bis 4 Kohlenstoffatomen stehen,
alle anwesenden Reste R⁸ unabhängig voneinander für R oder eine Hydroxygruppe stehen,
p für eine Zahl von 3 bis 25 steht,
alle anwesenden Reste R⁹ unabhängig voneinander für R oder eine OH-Gruppe stehen,
wobei mindestens zwei der anwesenden Reste R⁸ für OH stehen
und wobei alle anwesenden Reste R² unabhängig voneinander für H oder CH₃ stehen,
wobei gegebenenfalls nach der Umsetzung noch anwesende OH-Gruppen mit einem einwertigen linearen oder verzweigten Alkohol mit 1 bis 16 Kohlenstoffatomen weiter umgesetzt werden.

2. Zusammensetzung nach Anspruch 1, **dadurch gekennzeichnet, dass** das Hydroxygruppen enthaltende Polyorganosiloxan innerhalb der Siloxankette zusätzlich eine oder mehrere Einheiten der Formel (VI)
-Si(R⁹)(Z)-O- (VI)
enthält, worin alle anwesenden Reste Z unabhängig voneinander für einen Rest der Formel (VII) oder der Formel (VIII) stehen 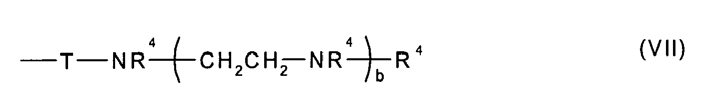 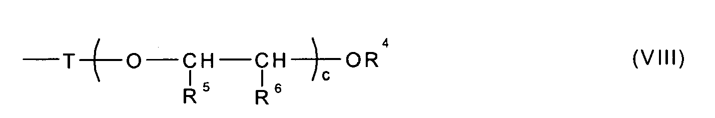 worin T für einen linearen oder verzweigten Alkylenrest mit 1 bis 4 Kohlenstoffatomen steht,
worin
b den Wert 0, 1 oder 2 besitzt,
c eine Zahl von 1 bis 20 ist,
alle Reste R⁴ unabhängig voneinander für H oder R stehen,
in jeder Einheit der Formel (VIII) einer der Reste R⁵ und R⁶ für H und der andere für H oder CH₃ steht.

3. Zusammensetzung nach Anspruch 1 oder 2, **dadurch gekennzeichnet, dass** zusätzlich zu den Silanen der Formel (III) und der Formel (IV) für die Umsetzung mit Hydroxygruppen enthaltendem Polyorganosiloxan ein oder mehrere Silane verwendet werden, die aus Silanen der Formel (IX), der Formel (X) und der Formel (XI) ausgewählt sind 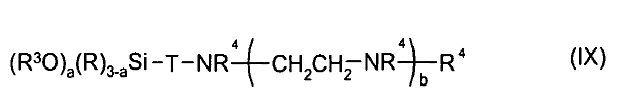 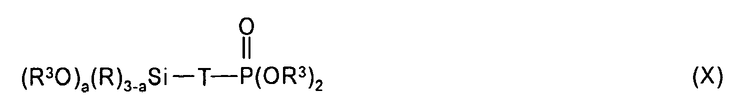 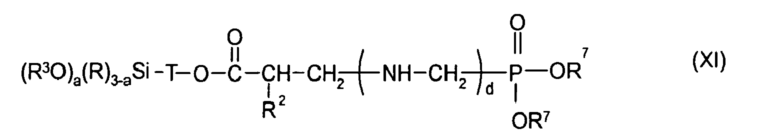 worin die anwesenden Reste R⁷ unabhängig voneinander für -CH₃ oder für -CH₂-CH₃ stehen und d den Wert 0 oder 1 besitzt,
wobei R, R², R³, R⁴, T, a und b die in Anspruch 1 bzw. 2 genannten Bedeutungen besitzen.

4. Zusammensetzung nach einem oder mehreren der Ansprüche 1 bis 3, **dadurch gekennzeichnet, dass** die Umsetzung in Gegenwart eines Katalysators durchgeführt wird.

5. Zusammensetzung nach Anspruch 4, **dadurch gekennzeichnet, dass** ein basischer Katalysator verwendet wird.

6. Zusammensetzung nach Anspruch 4 oder 5, **dadurch gekennzeichnet, dass** der Katalysator ein Metallalkoholat, vorzugsweise der Formel (XI), ist
M(OR³) (XI)
worin M für Na oder K steht,
und R³ die in Anspruch 1 genannte Bedeutung besitzt.

7. Zusammensetzung nach einem oder mehreren der Ansprüche 1 bis 6, **dadurch gekennzeichnet, dass** pro Mol OH-Gruppen des Hydroxygruppen enthaltenden Polyorganosiloxans 0,01 bis 0,6 Mol an Silanen der Formel (III) und der Formel (IV) eingesetzt werden.

8. Zusammensetzung nach einem oder mehreren der Ansprüche 1 bis 7, **dadurch gekennzeichnet, dass** bei der Umsetzung ein Gemisch von Silanen der Formel (III) und der Formel (IV) eingesetzt wird, das 2 bis 20, vorzugsweise 5 bis 14, Mole an Silan der Formel (III) pro Mol an Silan der Formel (IV) enthält.

9. Verwendung einer Zusammensetzung gemäß einem oder mehreren der Ansprüche 1 bis 8 zur Behandlung von Fasermaterialien.

10. Verwendung nach Anspruch 9, **dadurch gekennzeichnet, dass** die Behandlung der Fasermaterialien in Form eines Vorhangbeschichtungsprozesses durchgeführt wird.

11. Verwendung nach Anspruch 10, **dadurch gekennzeichnet, dass** anschließend an die Vorhangbeschichtung eine Härtung mittels UV-Strahlung oder mittels Elektronenstrahlung durchgeführt wird.

12. Verwendung nach einem oder mehreren der Ansprüche 9 bis 11, **dadurch gekennzeichnet, dass** die Fasermaterialien textile Flächengebilde in Form von Geweben, Maschenware oder Vliesen (non-wovens) sind.

13. Verwendung nach einem oder mehreren der Ansprüche 9 bis 12, **dadurch gekennzeichnet, dass** die Fasermaterialien aus Polyamid bestehen.
